# FASCICULE DE BREVET EUROPEEN

(11) **EP 4 028 273 B1**
(45) Date de publication et mention de la délivrance du brevet: **01.11.2023**
(21) Numéro de dépôt: 20767795.6
(22) Date de dépôt: 04.09.2020
(51) Int. Cl.: B60K 1/04

(54) **ENSEMBLE D'ALIMENTATION ÉLECTRIQUE DE VÉHICULE AUTOMOBILE**
STROMVERSORGUNGSANORDNUNG FÜR EIN KRAFTFAHRZEUG
POWER SUPPLY ASSEMBLY FOR A MOTOR VEHICLE

(30) Priorité: 10.09.2019 FR 1909924
(43) Date de publication de la demande: 20.07.2022
(73) Titulaire: Renault S.A.S., 92100 Boulogne-Billancourt (FR)
(72) Inventeur: ARSAC, Benoit, 78000 Versailles (FR); GAUTHIER, Christian, G., 78340 Les Clayes sous Bois (FR); HERICHER, Laura, 91620 La Ville du Bois (FR); LARRABEITI-JAUREGI, Mikel, 47009 Valladolid (ES); ROUDIER, Sebastien, 91300 Massy (FR)
(74) Mandataire: Renault Group
(86) Numéro de dépôt international: PCT/EP2020/074803
(87) Numéro de publication internationale: WO 2021/048021

(56) Documents cités:
- EP-A1- 1 939 026
- EP-B1- 1 939 026
- DE-A1-102013 225 605
- DE-A1-102017 206 791

## Description

La présente invention se rapporte à un ensemble d'alimentation électrique de véhicule automobile.

Un domaine d'application envisagé est notamment celui des véhicules automobiles électriques ou bien des véhicules hybrides, dont l'ensemble d'alimentation électrique est embarqué.

Ainsi, l'ensemble d'alimentation électrique d'un véhicule hybride est généralement installé sous le coffre arrière du véhicule. Il comprend un carter présentant un fond et quatre parois deux à deux opposées l'une de l'autre et dressées en saillie du fond, deux latérales, une postérieure et une antérieure. Il comprend également un jeu de modules de batterie d'accumulateurs agencé à l'intérieur du carter. Chacun des modules du jeu comporte une batterie d'accumulateurs présentant deux extrémités opposées, et deux flasques opposés venant coiffer respectivement les extrémités. Les accumulateurs sont par exemple des accumulateurs lithium prismatiques installés en série entre les deux flasques.

Les modules du jeu sont installés à l'intérieur du carter sur le fond selon une pluralité de rangées contiguës de n modules. Les n modules sont situés coaxialement dans le prolongement les uns des autres et sensiblement parallèlement aux parois latérales. Aussi, ils sont couplés électriquement en série.

Les carters équipés du jeu de modules doivent offrir une résistance à la déformation et satisfaire les essais de choc ou « *crash test* ». Aussi, pour ce faire, on installe en travers du carter entre les modules et perpendiculairement aux parois latérales, des traverses de renfort. Elles s'étendent alors d'une paroi latérale à l'autre de manière à les relier mécaniquement et à rendre le carter plus rigide. Toutefois, ces traverses de renfort sont installées au détriment de l'espace réservé aux modules de batterie d'accumulateurs, et par conséquent, aux quantités d'énergie électrique que l'on peut stocker.

Aussi, il a été imaginé d'installer des éléments de renfort à l'extérieur du carter, mais toujours au détriment de l'espace réservé aux batteries d'accumulateurs. On pourra se reporter au document CN101209659A, lequel décrit de tels éléments de renfort. EP 1 939 026 A1 divulgue un ensemble d'alimentation électrique de véhicule automobile.

Aussi, un problème qui se pose et que vise à résoudre la présente invention est de fournir un ensemble d'alimentation électrique de véhicule automobile offrant une bonne résistance à la déformation sans pour autant obérer la quantité d'énergie stockable et l'intégrabilité au véhicule, ni trop augmenter le poids et l'encombrement, tant à l'intérieur qu'à l'extérieur du carter.

Dans le but de résoudre ce problème, il est proposé un ensemble d'alimentation électrique de véhicule automobile comprenant : un carter présentant un fond et au moins deux parois latérales opposées l'une de l'autre et dressées en saillie dudit fond ; et, un jeu de modules de batterie d'accumulateurs, chacun des modules dudit jeu comportant une batterie d'accumulateurs présentant deux extrémités opposées, et deux flasques opposés coiffant respectivement lesdites extrémités, les modules dudit jeu étant installés à l'intérieur dudit carter sur ledit fond en une pluralité de rangées contiguës de n modules situés coaxialement dans le prolongement les uns des autres et sensiblement parallèlement auxdites parois latérales. Lesdites rangées contiguës sont agencées de manière à ce que les flasques des modules desdites rangées soient respectivement alignés bord à bord selon une direction sensiblement perpendiculaire auxdites parois latérales opposées ; et lesdits flasques alignés sont solidaires dudit fond dudit carter de manière à former des traverses rigides à l'intérieur dudit carter.

Ainsi, une caractéristique de l'invention réside dans l'agencement particulier des modules des rangées de manière à ce que les flasques soient ajustés bord à bord et aussi alignés selon une direction perpendiculaire aux parois latérales, et qu'au surplus, les flasques soient rendus solidaires du fond du carter. Autrement dit, on profite de la structure des modules eux-mêmes, pour constituer des traverses avec les flasques permettant alors de rendre le carter plus rigide. En effet, les flasques étant ajustés bord à bord selon une direction perpendiculaire aux parois latérales et au surplus, solidaire du fond du carter, ils constituent un élément rigide apte à résister à la compression, comme on l'expliquera plus en détail dans la suite de la description.

De la sorte, il n'est nul besoin d'installer des traverses auxiliaire et partant, le carter est réservé à la seule installation des modules de batterie d'accumulateurs et il est malgré tout rigide pour pouvoir résister à la déformation et satisfaire aux essais de choc.

Selon un mode de mise en oeuvre de l'invention particulièrement avantageux, les modules de chacune desdites rangées sont reliés ensemble deux à deux par un seul et même flasque. De la sorte, pour chacune des rangées, on relie deux batteries d'accumulateurs par un même flasque, et partant, par rapport à une longueur de rangée donnée avec des modules présentant chacun deux flasques, on vient loger une plus grande quantité d'accumulateurs.

Aussi, lesdits modules dudit jeu de modules présentent avantageusement une seule et même longueur. De la sorte, tous les flasques des modules peuvent être alignés bord à bord, à l'intérieur du carter et peuvent ainsi constituer des traverses de renfort après qu'ils ont été solidarisés dans le fond du carter. De plus, il est plus aisé de garnir tout l'espace disponible du carter dont les dimensions sont prévues en fonction des modules.

Préférentiellement, ledit carter présente une paroi antérieure et une paroi postérieure opposée, dressées en saillie dudit fond et reliant respectivement lesdites parois latérales sensiblement perpendiculairement pour fermer ledit carter. De la sorte, on augmente plus encore la rigidité du carter.

En outre, chacun desdits flasques présente avantageusement une épaisseur donnée et au moins un orifice traversant pratiqué dans ladite épaisseur pour autoriser le passage d'une vis de fixation. Préférentiellement, les flasques présentent deux orifices parallèles pratiquée dans leur épaisseur permettant le passage de deux vis de fixation pour une parfaite solidarisation du flasque et du fond du carter.

Aussi, selon un mode de réalisation de l'invention particulièrement avantageux, ledit fond dudit carter présente des taraudages pour recevoir les vis de fixation desdits flasques. Ainsi, les taraudages sont pratiqués dans le fond du carter dans des positions prédéfinies afin d'accueillir le jeu de modules de batterie d'accumulateurs. Après que les modules ont été ajustés dans le carter, on vient alors enfiler les vis dans les orifices des flasques pour les visser dans les taraudages et désolidariser ainsi les flasques au fond du carter.

Selon une variante d'exécution, ledit fond dudit carter comprend des collets taraudés pour recevoir lesdites vis de fixation. De la sorte, lorsque l'épaisseur du fond du carter est relativement faible, l'ancrage des vis dans le fond est compensé pour une meilleure solidarisation.

Aussi, selon cette variante d'exécution, lesdits flasques présentent avantageusement des chambrages dans le prolongement desdits orifices traversant pour pouvoir loger lesdits collets. De la sorte, il n'y a aucun espace libre dans le carter et le rapport entre la puissance électrique stockable due aux batteries d'accumulateurs, sur l'espace total définit par le carter est optimal.

Préférentiellement, chacun desdits flasques présente une forme sensiblement parallélépipédique rectangle. De la sorte, les flasques alignés flanc contre flanc peuvent venir en butée les uns contre les autres et offrent ainsi une parfaite résistance en compression longitudinale.

En outre, chacun desdits flasques est préférentiellement moulé d'une seule pièce en alliage d'aluminium. De la sorte, on forme des traverses de renfort avec un rapport poids/résistance avantageux.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
[Fig. 1] est une vue schématique en perspective d'un ensemble d'alimentation électrique conforme à l'art antérieur ;
[Fig. 2] est une vue schématique de dessus d'un ensemble d'alimentation électrique selon l'invention conformément à un premier mode de mise en oeuvre ;
[Fig. 3] est une vue de dessus d'un ensemble d'alimentation électrique selon l'invention conformément à un second mode de mise en oeuvre ;
[Fig. 4] est une vue schématique de détail en coupe selon le plan IV-IV de la figure [Fig. 3] conformément à une variante de réalisation ; et,
[Fig. 5] est une vue schématique de détail en coupe selon le plan IV-IV de la figure [Fig. 3] conformément à une autre variante de réalisation.

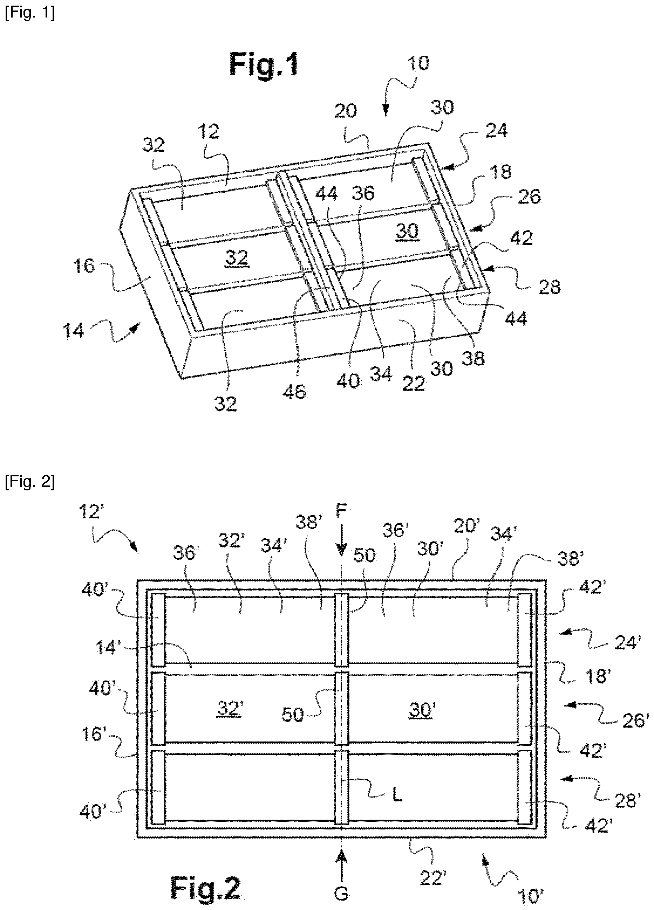

La Figure 1 montre un premier ensemble d'alimentation électrique 10 conforme à l'art antérieur. Il comprend un premier carter 12 présentant un premier fond 14, une première paroi antérieure 16, une première paroi postérieure 18 et deux premières parois latérales opposées 20, 22 reliées aux premières parois antérieure 16 et postérieure 18. Aussi, le premier carter 12 est de forme générale rectangulaire et les premières parois latérales opposées 20, 22 présentent une longueur supérieure à celle des premières parois antérieure 16 et postérieur 18.

L'ensemble d'alimentation électrique 10 comporte trois premières rangées 24, 26, 28 contiguës de deux premiers modules de batterie d'accumulateurs, un premier premier module 30 et un second premier module 32.

Chaque premier module de batterie d'accumulateurs 30, 32 comporte une première batterie d'accumulateurs 34 présentant deux premières extrémités opposées 36, 38 et deux premiers flasques opposés, un premier premier flasque 40 et un second premier flasque 42 venant coiffer respectivement les deux premières extrémités opposées 36, 38. Les flasques 40, 42 présentent dans leurs flancs un évidement correspondant à la section droite des extrémités opposées 36, 38 de la batterie d'accumulateurs 34 de manière à pouvoir y être engagées. Aussi, les premières batteries d'accumulateurs 34 des premiers modules 30, 32 de chacune des premières rangées 24, 26, 28 sont respectivement couplées électriquement l'une à l'autre.

La première batterie d'accumulateurs 34 est de section rectangulaire et elle est faite d'une succession d'accumulateurs prismatiques appliqués les uns contre les autres et couplés électriquement en série. Ils sont ainsi maintenus en applique les uns contre les autres par l'intermédiaire des premiers flasques 40, 42. Les premiers flasques 40, 42 sont identiques et d'une forme parallélépipédique rectangle. Leur section est sensiblement supérieure à celle de la batterie d'accumulateurs 34 et, autour de leur évidement, un rebord forme un épaulement 44 qui s'étend autour des premières extrémités opposées 36, 38.

Aussi, malgré le couplage électrique, les premiers premiers modules 30 et les seconds premiers modules 32 des trois premières rangées 24, 26, 28 sont séparés les uns des autres par une traverse 46 s'étendant d'une paroi latérale 20 à l'autre 22 et sur toute la hauteur du carter 12.

La traverse 46 permet de renforcer le carter 12 et ainsi d'offrir une meilleure résistance à la déformation lorsque, lors d'un choc, les deux parois latérales opposées 20, 22 sont entraînées en compression à force l'une vers l'autre.

Cependant, la traverse 46 oblige à réserver un espace qui est alors un espace perdu pour les batteries d'accumulateurs et par conséquent, pour les capacités de stockage d'énergie de l'ensemble d'alimentation électrique.

Aussi, on décrira en référence à la figure [Fig. 2], et selon une première variante de réalisation de l'objet de l'invention, un deuxième carter 12'. Les éléments de l'objet de la figure [Fig. 2] identiques ou ayant la même fonction que celui de la figure [Fig. 1], porteront la même référence affectée d'un signe « ' ».

Le deuxième carter 12' inclut trois deuxièmes rangées 24', 26', 28' contiguës de deux deuxièmes modules de batterie d'accumulateurs, un premier deuxième module 30' et un second deuxième module 32'. Le deuxième carter 12' de forme générale rectangulaire est identique au premier carter 12 et il présente un deuxième fond 14', une deuxième paroi antérieure 16', une deuxième paroi postérieure 18' et deux deuxièmes parois latérales opposées 20', 22' reliées aux deuxièmes parois antérieure 16' et postérieure 18'.

On observera tout d'abord que le carter 12' est dépourvu de traverse et que, les premier et second deuxièmes modules 30' et 32' comportant chacun une deuxième batterie d'accumulateurs 34' présentant deux deuxièmes extrémités opposées 36', 38', les deux deuxièmes extrémités 38', 36', en regard l'une de l'autre, sont reliées ensemble par un seul et même flasque intermédiaire 50. Ce flasque intermédiaire 50 vient coiffer, de chaque côté, les deux deuxièmes extrémités 38', 36' des deux deuxièmes batteries d'accumulateurs 34'. Aussi, le flasque intermédiaire 50 présente dans ses deux flancs opposés, un évidement correspondant à la section des deuxièmes extrémités opposées 36', 38' de la batterie d'accumulateurs 34' pour les y recevoir.

Les deux autres deuxièmes extrémités 36', 38' opposées l'une de l'autre, des deux deuxièmes batteries d'accumulateurs 34' de la première deuxième rangée 24' de deuxièmes modules 30', 32' reçoivent respectivement des deuxièmes flasques 40', 42'. Ces deuxièmes flasques 40', 42' viennent respectivement en regard des deuxièmes parois, antérieure 16' et postérieure 18'.

Aussi, avec un deuxième carter 12' dont la longueur est égale à celle du premier carter 12, on comprend qu'en remplaçant deux flasques par un flasque intermédiaire 50 et en retirant la traversent 46, on dispose d'une plus grande longueur pour pouvoir insérer des deuxièmes modules 30', 32', dont les deuxièmes batteries d'accumulateurs 34' incluent précisément, plus d'accumulateurs.

On observera que les deux deuxièmes flasques 40', 42' et le flasque intermédiaire 50 présent une section droite identique à celle des premiers flasques 40, 42 représentés sur la figure [Fig. 1].

En outre, les deux autres deuxièmes rangées 26' et 28' sont totalement analogues à la première 24'. Et par conséquent, les flasques intermédiaires 50 des deux autres deuxièmes rangées 26' et 28' s'étendent bord à bord et selon une même ligne L. Au surplus, les deux deuxièmes flasques 40', 42' des deux autres deuxièmes rangées 26' et 28' sont également respectivement alignés bord à bord.

Partant, en venant fixer sur le deuxième fond 14' du deuxième carter 12', les trois flasques intermédiaires 50 alignés bord à bord des trois deuxièmes rangées 24', 26' et 28', on forme alors un élément transversal formant traverse centrale rigide.

De la sorte, on comprend que les contraintes qui s'exerceraient simultanément l'une vers l'autre sur les parois latérales opposées 20', 22' selon les flèches F, G, lors d'un choc, verraient la traverse centrale rigide s'y opposer et y résister.

Au surplus, il est également possible de venir fixer sur le deuxième fond 14' les deux deuxièmes flasques 40', 42' des trois deuxièmes rangées 24', 26' et 28' de manière à former deux autres traverses auxiliaires symétriques l'une de l'autre par rapport à la traverse centrale rigide, respectivement le long des deuxièmes parois antérieure 16' et postérieure 18'.

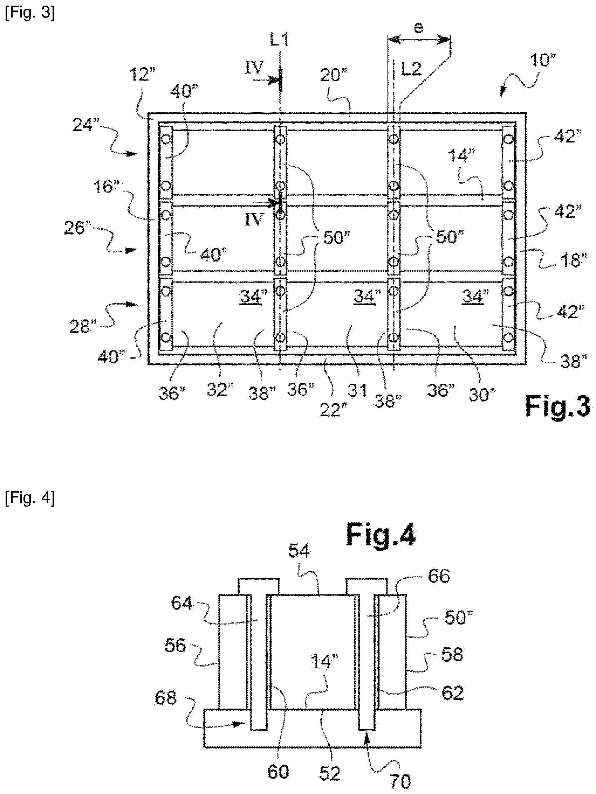

On se référera maintenant à la figure [Fig. 3] illustrant un ensemble d'alimentation électrique 10" selon un second mode de mise en oeuvre. Et on décrira également en détail le mode de fixation des flasques selon deux variantes de réalisation.

On retrouve ainsi sur cette figure [Fig. 3], un troisième carter 12" incluant trois troisièmes rangées 24", 26", 28" contiguës de trois troisièmes modules de batterie d'accumulateurs ; à une extrémité, un premier troisième module 30", au centre, un deuxième troisième module 31 et à l'autre extrémité, un troisième troisième module 32". Les troisièmes modules 30", 31, 32" de chacune des trois troisièmes rangées 24", 26", 28" contiguës sont respectivement situés dans le prolongement les uns des autres.

Le troisième carter 12" présente un troisième fond 14", une troisième paroi antérieure 16", une troisième paroi postérieure 18" et deux troisièmes parois latérales opposées 20", 22" reliées aux troisièmes parois, antérieure 16" et postérieure 18".

Les troisièmes modules 30", 31 et 32" comportent chacun, une troisième batterie d'accumulateurs 34" présentant deux troisièmes extrémités opposées 36", 38".

Les deux fois deux deuxièmes extrémités 38", 36" respectivement en regard l'une de l'autre, de chacune des trois troisièmes rangées 24", 26", 28", sont respectivement reliées ensemble par deux seuls deuxièmes flasques intermédiaires 50". Ces deuxièmes flasques intermédiaires 50" viennent coiffer, respectivement, les deux deuxièmes extrémités 38", 36" des trois troisièmes batteries d'accumulateurs 34". Ainsi, trois troisièmes batteries d'accumulateurs 34" s'étendent dans le prolongement les unes des autres et sont reliées entre elles par l'intermédiaire des flasques intermédiaires 50" et forment ainsi les trois modules 30", 31, 32" d'un seul bloc longitudinal.

Les deux troisièmes extrémités 36", 38" opposées l'une de l'autre, des deux troisièmes batteries d'accumulateurs 34', des deux troisièmes modules d'extrémité 32", 30", reçoivent respectivement deux troisièmes flasques 40", 42".

Aussi, les deux troisièmes flasques 40", 42" et les deux flasques intermédiaires 50" présentent une section droite identique à celle des premiers flasques 40, 42 représentés sur la figure [Fig. 1].

Par ailleurs, les deux autres troisièmes rangées 26" et 24" sont totalement analogues à la première 28". Et par conséquent, les trois fois deux flasques intermédiaires 50" des deux autres troisièmes rangées 26" et 24" s'étendent respectivement bord à bord et selon deux lignes parallèles L1 et L2. Au surplus, les deux troisièmes flasques 40", 42" des deux autres troisièmes rangées 26" et 24" sont également respectivement alignés bord à bord.

Partant, en venant fixer sur le troisième fond 14" du troisième carter 12", les trois fois deux flasques intermédiaires 50" alignés bord à bord des trois troisièmes rangées 24", 26" et 28", on forme alors deux éléments transversaux rigides parallèles.

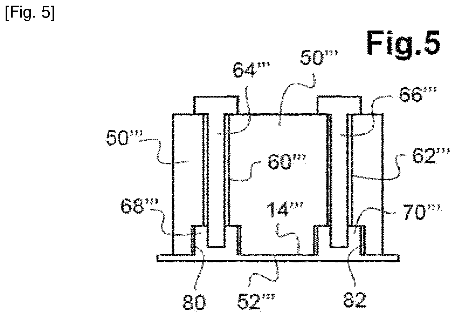

On décrira à présent en regard des figures [Fig. 4] et [Fig. 5], des modes de fixation des flasques sur le fond du carter, selon deux variantes de réalisation.

Ainsi, on retrouve sur la figure [Fig. 4] un seul flasque intermédiaire 50" en coupe. Il présente une forme générale parallélépipédique rectangle, soit deux grands côtés opposés, 52, 54 et deux petits côtés opposés 56, 58. Il présente également une épaisseur e illustrée sur la figure [Fig. 3] et correspondant à une tranche. Il est par exemple moulé d'une seule pièce en alliage d'aluminium. Aussi, le flasque intermédiaire 50" présente deux orifices parallèles 60, 62, ménagés à distance l'un de l'autre dans son épaisseur e et perpendiculairement aux deux grands côtés opposés 52, 54 dans lesquels ils débouchent respectivement. De la sorte, le flasque intermédiaire 50" est monté verticalement en appui de l'un de ses grands côtés 52 contre le troisième fond 14" du troisième carter 12", et il y est maintenu en position fixe grâce à deux vis 64, 66 respectivement engagées dans les deux orifices 60, 62 et vissées dans deux taraudages 68, 70 pratiqués dans la paroi de fond 14". Les deux vis 64, 66 présentent respectivement deux têtes 72, 74 qui viennent s'appliquer contre la tranche de l'autre grand côté opposé 54 pour maintenir le flasque intermédiaire 50" en position fixe contre la paroi de fond 14".

De la sorte, les flasques intermédiaires 50" tels que représentés sur la figure [Fig. 3], trois alignés selon la ligne L1 et trois alignés selon la ligne L2, sont respectivement maintenus en position fixe dans le prolongement les uns des autres leurs petits côtés 56, 58 en regard ou en contact, soit respectivement bord à bord.

Selon une autre variante de réalisation illustrée sur la figure [Fig. 5], sur laquelle les éléments identiques à ceux de la figure [Fig. 2] ou ayant la même fonction, portent la même référence affectée d'un signe « ‴ », la paroi de fond 14‴ est équipée de deux collets taraudés 68‴, 70‴ permettant de recevoir les vis 64‴, 66‴, tandis que le grand côté 52'" en appui contre la paroi de fond 14'" présente des chambrages 80, 82 dans le prolongement des orifices 60‴, 62‴ pour accueillir les collets taraudés 76, 78. Une telle variante de réalisation permet de réduire l'épaisseur de la paroi de fond pour réduire l'encombrement et le poids de l'ensemble d'alimentation électrique conforme à l'invention.

## Revendications

1. Ensemble d'alimentation électrique (10' ; 10") de véhicule automobile comprenant :
- un carter (12' ; 12") présentant un fond (14' ; 14") et au moins deux parois latérales (20', 22' ; 20", 22") opposées l'une de l'autre et dressées en saillie dudit fond (14' ; 14") ;
- un jeu de modules (30', 32' ; 30", 31, 32") de batterie d'accumulateurs, chacun des modules dudit jeu comportant une batterie d'accumulateurs (34' ; 34") présentant deux extrémités opposées (36', 38' ; 36", 38"), et deux flasques opposés (40', 42' ; 40", 42") coiffant respectivement lesdites extrémités, les modules (30', 32' ; 30", 31, 32") dudit jeu étant installés à l'intérieur dudit carter (12' ; 12") sur ledit fond (14' ; 14") en une pluralité de rangées contiguës (24', 26', 28' ; 24", 26", 28") de n modules situés coaxialement dans le prolongement les uns des autres et sensiblement parallèlement auxdites parois latérales (20', 22' ; 20", 22");
**caractérisé en ce que** lesdites rangées contiguës (24', 26', 28' ; 24", 26", 28") sont agencées de manière à ce que les flasques (40', 42', 50' ; 50", 40", 42") des modules desdites rangées soient respectivement alignés bord à bord selon une direction sensiblement perpendiculaire auxdites parois latérales opposées (20', 22' ; 20", 22") ;
et **en ce que** lesdits flasques alignés (40', 42', 50' ; 50", 40", 42") sont solidaires dudit fond (14' ; 14") dudit carter (12' ; 12") de manière à former des traverses rigides à l'intérieur dudit carter.

2. Ensemble d'alimentation électrique selon la revendication 1, **caractérisé en ce que** les modules (30', 32' ; 30", 31, 32") de chacune desdites rangées (24', 26', 28' ; 24", 26", 28") sont reliés ensemble deux à deux par un seul et même flasque (50' ; 50").

3. Ensemble d'alimentation électrique selon la revendication 1 ou 2, **caractérisé en ce que** lesdits modules (30', 32' ; 30", 31, 32") dudit jeu de modules présentent une seule et même longueur.

4. Ensemble d'alimentation électrique selon l'une quelconque des revendications 1 à 3, **caractérisé en ce que** ledit carter (12' ; 12") présente une paroi antérieure (16' ; 16") et une paroi postérieure (18' ; 18") opposée, dressées en saillie dudit fond (14' ; 14") et reliant respectivement lesdites parois latérales (20', 22' ; 20", 22") sensiblement perpendiculairement pour fermer ledit carter (12' ; 12").

5. Ensemble d'alimentation électrique selon l'une quelconque des revendications 1 à 4, **caractérisé en ce que** chacun desdits flasques (50" ; 50"') présente une épaisseur donnée et au moins un orifice (60, 62 ; 60‴, 62‴) traversant pratiqué dans ladite épaisseur pour autoriser le passage d'une vis de fixation (64, 66 ; 64‴, 66‴).

6. Ensemble d'alimentation électrique selon la revendication 5, **caractérisé en ce que** ledit fond dudit carter (14") présente des taraudages (68, 70) pour recevoir les vis de fixation (64, 66) desdits flasques (50").

7. Ensemble d'alimentation électrique selon la revendication 5 ou 6, **caractérisé en ce que** ledit fond dudit carter (14‴) comprend des collets taraudés (68‴, 70‴) pour recevoir lesdites vis de fixation (64‴, 66‴).

8. Ensemble d'alimentation électrique selon la revendication 7, **caractérisé en ce que** lesdits flasques (50‴) présentent des chambrages (80, 82) dans le prolongement desdits orifices (60‴, 62‴) traversant pour pouvoir loger lesdits collets (68‴, 70‴).

9. Ensemble d'alimentation électrique selon l'une quelconque des revendications 1 à 8, **caractérisé en ce que** chacun desdits flasques (40', 42', 50'; 40", 42", 50" ; 50"') présente une forme sensiblement parallélépipédique rectangle.

10. Ensemble d'alimentation électrique selon l'une quelconque des revendications 1 à 9, **caractérisé en ce que** chacun desdits flasques (40', 42', 50'; 40", 42", 50" ; 50"') est moulé d'une seule pièce en alliage d'aluminium.

## Patentansprüche

1. Stromversorgungseinheit (10'; 10") eines Kraftfahrzeugs, die enthält:
- ein Gehäuse (12'; 12") mit einem Boden (14'; 14") und mindestens zwei Seitenwänden (20', 22'; 20", 22"), die einander gegenüberliegen und sich vom Boden (14'; 14") vorstehend erheben;
- einen Satz von Modulen (30', 32'; 30", 31, 32") von Akkumulatorenbatterien, wobei jedes der Module des Satzes eine Akkumulatorenbatterie (34'; 34") mit zwei gegenüberliegende Enden (36', 38'; 36", 38") und zwei gegenüberliegende Flansche (40', 42'; 40", 42") aufweist, die die Enden bedecken, wobei die Module (30', 32'; 30", 31, 32") des Satzes innerhalb des Gehäuses (12'; 12") auf dem Boden (14'; 14") in einer Vielzahl von nebeneinanderliegenden Reihen (24', 26', 28'; 24", 26", 28") von n Modulen eingebaut sind, die sich koaxial in gegenseitiger Verlängerung und im Wesentlichen parallel zu den Seitenwänden (20', 22'; 20", 22") befinden;
**dadurch gekennzeichnet, dass** die nebeneinanderliegenden Reihen (24', 26', 28'; 24", 26", 28") so eingerichtet sind, dass die Flansche (40', 42', 50'; 50", 40", 42") der Module der Reihen auf Stoß gemäß einer Richtung im Wesentlichen lotrecht zu den gegenüberliegenden Seitenwänden (20', 22'; 20", 22") aneinandergereiht sind, und dass die aneinandergereihten Flansche (40', 42', 50'; 50", 40", 42") fest mit dem Boden (14'; 14") des Gehäuses (12'; 12") verbunden sind, um innerhalb des Gehäuses steife Querträger zu bilden.

2. Stromversorgungseinheit nach Anspruch 1, **dadurch gekennzeichnet, dass** die Module (30', 32'; 30", 31, 32") jeder der Reihen (24', 26', 28'; 24", 26", 28") paarweise durch einen einzigen gleichen Flansch (50'; 50") miteinander verbunden sind.

3. Stromversorgungseinheit nach Anspruch 1 oder 2, **dadurch gekennzeichnet, dass** die Module (30', 32'; 30", 31, 32") des Satzes von Modulen eine einzige gleiche Länge aufweisen.

4. Stromversorgungseinheit nach einem der Ansprüche 1 bis 3, **dadurch gekennzeichnet, dass** das Gehäuse (12'; 12") eine Vorderwand (16'; 16") und eine gegenüberliegende Rückwand (18'; 18") hat, die sich vom Boden (14'; 14) vorstehend erheben und die Seitenwände (20', 22'; 20", 22") im Wesentlichen lotrecht verbinden, um das Gehäuse (12'; 12") zu schließen.

5. Stromversorgungseinheit nach einem der Ansprüche 1 bis 4, **dadurch gekennzeichnet, dass** jeder der Flansche (50"; 50"') eine gegebene Dicke und mindestens eine Durchgangsöffnung (60, 62; 60", 62") hat, die in der Dicke ausgearbeitet ist, um den Durchgang einer Befestigungsschraube (64, 66; 64"', 66"') zu erlauben.

6. Stromversorgungseinheit nach Anspruch 5, **dadurch gekennzeichnet, dass** der Boden des Gehäuses (14") Innengewinde (68, 70) hat, um die Befestigungsschrauben (64, 66) der Flansche (50") aufzunehmen.

7. Stromversorgungseinheit nach Anspruch 5 oder 6, **dadurch gekennzeichnet, dass** der Boden des Gehäuses (14‴) Innengewindehälse (68"', 70"') enthält, um die Befestigungsschrauben (64"', 66"') aufzunehmen.

8. Stromversorgungseinheit nach Anspruch 7, **dadurch gekennzeichnet, dass** die Flansche (50"') Einsenkungen (80, 82) in der Verlängerung der Durchgangsöffnungen (60", 62") haben, um die Hälse (68"', 70"') unterbringen zu können.

9. Stromversorgungseinheit nach einem der Ansprüche 1 bis 8, **dadurch gekennzeichnet, dass** jeder der Flansche (40', 42', 50'; 40", 42", 50"; 50") eine im Wesentlichen parallelepipedische rechtwinklige Form hat.

10. Stromversorgungseinheit nach einem der Ansprüche 1 bis 9, **dadurch gekennzeichnet, dass** jeder der Flansche (40', 42', 50'; 40", 42, 50"; 50") aus einem Stück aus Aluminiumlegierung geformt ist.

## Claims

1. Electrical power supply assembly (10'; 10") for a motor vehicle, comprising:
- a casing (12'; 12") having a bottom (14'; 14") and at least two lateral walls (20', 22'; 20'', 22'') that are opposite one another and protrude upright from said bottom (14'; 14");
- a set of accumulator battery modules (30', 32'; 30", 31, 32"), each of the modules of said set having an accumulator battery (34'; 34'') having two opposite ends (36', 38'; 36", 38"), and two opposite flanges (40', 42'; 40", 42") respectively covering said ends, the modules (30', 32'; 30", 31, 32") of said set being installed inside said casing (12'; 12") on said bottom (14'; 14") in a plurality of contiguous rows (24', 26', 28'; 24", 26", 28'') of n modules situated coaxially in the extension of one another and substantially parallel to said lateral walls (20', 22'; 20", 22");
**characterized in that** said contiguous rows (24', 26', 28'; 24", 26", 28") are arranged such that the flanges (40', 42', 50'; 50", 40", 42") of the modules of said rows are respectively aligned edge to edge in a direction substantially perpendicular to said opposite lateral walls (20', 22'; 20", 22");
and **in that** said aligned flanges (40', 42', 50'; 50", 40", 42") are secured to said bottom (14'; 14") of said casing (12'; 12") so as to form rigid crossmembers inside said casing.

2. Electrical power supply assembly according to Claim 1, **characterized in that** the modules (30', 32'; 30", 31, 32") of each of said rows (24', 26', 28'; 24", 26", 28") are connected together in pairs by just a single flange (50'; 50").

3. Electrical power supply assembly according to Claim 1 or 2, **characterized in that** said modules (30', 32'; 30", 31, 32") of said set of modules have just a single length.

4. Electrical power supply assembly according to any one of Claims 1 to 3, **characterized in that** said casing (12'; 12") has a front wall (16'; 16") and an opposite rear wall (18'; 18"), protruding upright from said bottom (14'; 14") and respectively connecting said lateral walls (20', 22'; 20", 22") substantially perpendicularly so as to close said casing (12'; 12").

5. Electrical power supply assembly according to any one of Claims 1 to 4, **characterized in that** each of said flanges (50"; 50‴) has a given thickness and at least one through-orifice (60, 62; 60‴, 62‴) made in said thickness so as to allow a fastening screw (64, 66; 64‴, 66‴) to pass through.

6. Electrical power supply assembly according to Claim 5, **characterized in that** said bottom of said casing (14") has tapped portions (68, 70) for receiving the screws (64, 66) for fastening said flanges (50").

7. Electrical power supply assembly according to Claim 5 or 6, **characterized in that** said bottom of said casing (14‴) comprises tapped collars (68‴, 70‴) for receiving said fastening screws (64‴, 66‴).

8. Electrical power supply assembly according to Claim 7, **characterized in that** said flanges (50‴) have recesses (80, 82) in the extension of said through-orifices (60‴, 62‴) so as to be able to accommodate said collars (68‴, 70‴).

9. Electrical power supply assembly according to any one of Claims 1 to 8, **characterized in that** each of said flanges (40', 42', 50'; 40", 42", 50"; 50‴) has a substantially rectangular parallelepipedal shape.

10. Electrical power supply assembly according to any one of Claims 1 to 9, **characterized in that** each of said flanges (40', 42', 50'; 40", 42", 50"; 50‴) is molded in one piece from aluminum alloy.
